Europäisches Patentamt

European Patent Office

Office européen des· brevets

(19)

(11) Numéro de publication : **0 150 630 B1**

(12) **FASCICULE DE BREVET EUROPÉEN**

(45) Date de publication du fascicule du brevet :
28.09.88

(51) Int. Cl.⁴ : **A 01 F 15/00**

(21) Numéro de dépôt : 84400188.3

(22) Date de dépôt : 27.01.84

(54) **Presse à balles cylindriques.**

(43) Date de publication de la demande :
07.08.85 Bulletin 85/32

(45) Mention de la délivrance du brevet :
28.09.88 Bulletin 88/39

(84) Etats contractants désignés :
DE FR GB IT NL

(56) Documents cités :
EP-A- 0 076 502
FR-A- 2 511 838
GB-A- 2 010 654
US-A- 3 722 197
US-A- 4 155 298

(73) Titulaire : JOHN DEERE (Société Anonyme)
20, Rue André Dessaux
F-45401 Fleury-les-Aubrais (FR)

(72) Inventeur : Anstey, Henry Dennis
RR4 Box 188a
Ottumwa Iowa 52501 (US)
Inventeur : Viaud, Jean
16, Rue de l'Ecole
F-57200 Sarreguemines (FR)

(74) Mandataire : Pruvost, Marc Henri
Cabinet ORES 6, Avenue de Messine
F-75008 Paris (FR)

EP 0 150 630 B1

Jouve, 18, rue St-Denis, 75001 Paris, France

## Description

La présente invention concerne les presses à balles cylindriques ou rondes.

Ces presses sont d'un type général bien connu et comprennent des jeux de bandes ou courroies qui, par leur déplacement, forment par enroulement à l'intérieur d'une chambre ménagée dans le corps de la presse une balle de forme générale cylindrique à partir de produits de récolte, notamment de fourrage ou de foin, ramassés sur le champ au cours de la progression de la presse. Quand la balle a atteint le diamètre désiré et a été liée, la porte arrière de la presse est ouverte et la balle est déchargée sur le sol. La formation d'une autre balle par enroulement peut être déclenchée ensuite à l'intérieur de la presse.

Les produits destinés à former la balle sont ramassés sur le sol au moyen d'un ramasseur. Ils sont transférés par celui-ci dans la chambre de la presse, entre les brins des bandes ou courroies, qui occupent au début de l'opération des positions voisines. Du fait de ce rapprochement et des sens de déplacement opposés de ces brins des bandes ou courroies, les produits ramassés au début de la formation d'une balle ont tendance à s'enrouler et à former le noyau d'une nouvelle balle, dont le diamètre va aller en augmentant, les brins de bandes ou courroies s'écartant l'un de l'autre en fonction de cette augmentation de diamètre de la balle. Ces bandes ou courroies sont alors maintenues sous tension par des rouleaux de tension qui sont eux-mêmes soumis à l'action de ressorts ou de cylindres hydrauliques.

Pour favoriser ce début de formation de la balle, il est prévu de manière connue, vers la partie avant de l'intervalle ou orifice de pénétration des produits dans la chambre de la presse, un rouleau dénommé rouleau d'amorçage, voisin d'un rouleau fixe de la presse sur lequel passent les bandes ou courroies et qui sert généralement de rouleau d'entraînement, voir par exemple EP-A-076 502.

Dans le cas de certains produits de récolte, notamment de produits destinés à former du fourrage, par exemple de ray-grass, et en particulier dans des conditions humides, des difficultés apparaissent du fait que ces produits ont tendance à s'enrouler autour du rouleau d'amorçage classique, ce qui s'oppose à la formation d'un noyau de balle correct et est, en outre, à l'origine de bourrages qui peuvent exiger l'arrêt de la presse et qui, en conséquence, ralentissent le rythme du travail.

Il est également connu que, dans des machines agricoles à éléments rotatifs, des foins de paille s'enroulent autour de ces éléments, par exemple le rouleau de compression supérieur de l'entrée d'une presse à balles cylindriques et l'on a déjà proposé dans US-A-4 155 298 de s'affranchir de cet inconvénient en utilisant une racle coopérant avec ce rouleau.

Lorsque ce dernier, toutefois, est le rouleau d'amorçage (et non pas de compression) d'une presse selon EP-A-076 502, une racle usuelle disposée comme dans US-A-4 155 298, ne permet pas d'assurer avec certitude la formation satisfaisante d'un noyau de balle et cela, vraisemblablement, parce que la racle du brevet US fait tomber les produits déposés sur le rouleau dans la chambre de formation de balle.

Le but de l'invention est de remédier à cet inconvénient des presses existantes à rouleau d'amorçage.

L'invention concerne en conséquence une presse à balles cylindriques ou rondes comprenant des jeux de bandes ou courroies ménageant une chambre de formation d'une balle par enroulement, ainsi qu'un ramasseur destiné à reprendre les produits de récolte sur le sol pour leur transfert à la chambre de formation de la balle à travers un intervalle ou orifice d'entrée des produits, et un rouleau d'amorçage disposé de l'autre côté de cet orifice par rapport au ramasseur, caractérisée en ce qu'une racle est associée à ce rouleau d'amorçage, au-dessous de celui-ci, en combinaison avec des doigts disposés entre les bandes ou courroies, fixés sur le châssis de la presse, s'étendant au voisinage du rouleau d'entraînement inférieur des bandes ou courroies et dont l'extrémité se prolonge jusqu'au voisinage immédiat du rouleau d'amorçage, au-dessus de ce dernier.

On obtient de cette manière, par la conjugaison des doigts et de la racle précités, un effet de guidage ou d'orientation des produits de récolte qui favorise l'amorce de l'enroulement de ces produits pour former un noyau de balle et qui s'oppose avec certitude à tout enroulement de ces produits autour du rouleau d'amorçage.

Selon une réalisation préférée de l'invention, les doigts sont munis à l'arrière d'une partie formant axe de pivotement supportée par un profilé fixe transversal et traversent des fentes d'une aile de ce profilé, pour permettre un débattement limité par pivotement en vue de leur adaptation à des déplacements latéraux éventuels des courroies.

La racle s'étend de façon continue sur toute la largeur de la presse ou bien est constituée par des éléments séparés ou par des dents rapprochées les unes des autres.

La description qui va suivre, faite au regard des dessins annexés donnés à titre non limitatif, permettra de mieux comprendre l'invention.

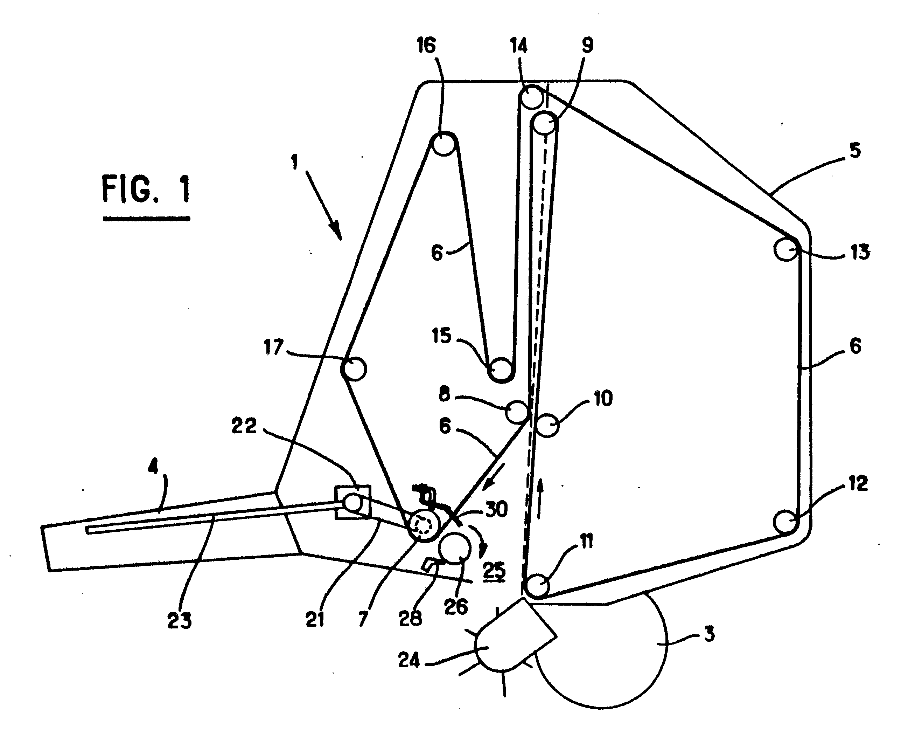

La Figure 1 est une représentation schématique de profil d'une presse à balles cylindriques avec rouleau d'amorçage, comportant une racle et des doigts associés à ce rouleau.

La Figure 2 est une vue partielle à plus grande échelle montrant un mode de réalisation possible de l'invention.

Sur les dessins on a désigné par la référence 1 une presse à balles cylindriques de type général classique, comportant un châssis avant fixe indiqué schématiquement en 2 et supporté par des roues 3, ce châssis portant lui-même un timon 4 destiné à son attelage à un tracteur par exemple. Sur la partie avant fixe 2 formant châssis est articulée de la manière habituelle une porte arrière indiquée de façon générale en 5, qui peut pivoter sur la partie avant autour d'un axe transversal horizontal supérieur (non représenté), l'ouverture et la fermeture de cette porte étant commandées de façon en soi classique par des vérins hydrauliques ou des moyens équivalents (également non représentés).

Un jeu de courroies 6 est prévu sur la presse. Ce jeu comprend, de la façon usuelle, un certain nombre de courroies parallèles réparties sur la largeur de la presse et passant sur des rouleaux de renvoi 7-17. Certains de ces rouleaux de renvoi sont montés sur la partie avant fixe 2 du châssis, tandis que d'autres sont supportés par la porte arrière 5. Dans le cas du mode de réalisation représenté, les bandes ou courroies 6 délimitent complètement la chambre d'enroulement, et il est prévu en conséquence un seul jeu de courroies. Il va de soi toutefois que l'invention est également applicable dans le cas d'une presse à balles cylindriques comportant un jeu de courroies sur la partie avant de la presse et un second jeu de courroies sur sa partie arrière ou porte. Certains des rouleaux de renvoi sont supportés de façon classique à l'extrémité de bras qui sont eux-mêmes montés de façon pivotante et qui sont soumis de la manière habituelle à l'action de ressorts ou de cylindres hydrauliques, afin d'assurer le maintien en tension des courroies de la presse.

Le rouleau de renvoi 7 est un rouleau d'entraînement des bandes ou courroies. Il est lui-même entraîné par une transmission par courroies ou chaînes 21 à partir d'une boîte de renvoi 22 attaquée elle-même par l'arbre de transmission 23 relié à l'abre de prise de force du tracteur. On pourrait également prévoir une transmission entre le rouleau 7 et un autre rouleau de renvoi, par exemple le rouleau supérieur, pour répartir sur deux rouleaux l'entraînement des bandes ou courroies.

On a indiqué en 24, à la partie inférieure de la presse le ramasseur qui est monté au voisinage du rouleau inférieur arrière 11 et qui sert à ramasser sur le sol les produits de récolte qui y reposent généralement en andains, en vue de leur introduction dans la chambre de la presse à travers un intervalle ou orifice d'entrée des produits indiqué en 25. De l'autre côté de cet intervalle 25 par rapport au ramasseur 24, il est prévu d'une manière en soi connue un rouleau d'amorçage 26. Une modification particulière du rouleau d'amorçage est le sujet de la demande de brevet européen divisionnaire avec le numéro de publication 250004.

Au début de l'opération de formation d'une balle à l'intérieur de la presse, les brins de courroies qui délimitent la chambre d'enroulement de la presse sont très rapprochés l'un de l'autre. Les produits ramassés par le ramasseur 24 pénètrent entre ces brins de courroies par l'intervalle 25. Ils ont tendance à s'enrouler sur eux-mêmes et cet enroulement est favorisé par la présence du rouleau d'amorçage 26, qui est entraîné de façon positive par des moyens non représentés à partir du rouleau d'entraînement 7.

Toutefois, comme indiqué précédemment, pour certains produits de récolte, notamment pour les fourrages tels que le ray-grass très humide, des difficultés peuvent apparaître du fait de la tendance à l'enroulement de ces produits de récolte autour du rouleau d'amorçage. Il en résulte éventuellement des bourrages qui exigent un arrêt de la presse.

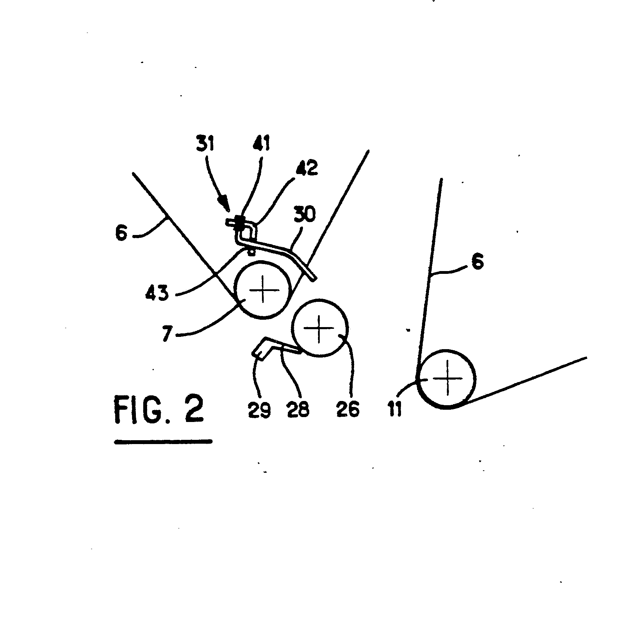

On se reportera maintenant à la Fig. 2, qui montre un mode de réalisation de l'invention.

Sur cette fig. 2, qui est une vue en représentation partielle, on a indiqué en 7 le rouleau de renvoi des bandes ou courroies 6, en 26 le rouleau d'amorçage et en 11 le rouleau de renvoi voisin de la partie supérieure du ramasseur 24 et qui délimite avec le rouleau d'amorçage 26 l'orifice 25 par lequel les produits de récolte pénètrent à l'intérieur de la chambre d'enroulement de la presse.

Suivant l'invention, il est prévu au voisinage du rouleau d'amorçage 26, dans le cas présent au-dessous de celui-ci, une racle fixe 28 qui est montée sur la partie avant 2 du châssis de la presse. La fixation de cette racle sur ce châssis peut avoir lieu de toute manière désirée, par exemple par boulonnage d'un talon 29 de la racle sur le châssis. On voit sur la Fig. 2 que cette racle s'étend jusqu'au voisinage immédiat de la périphérie du rouleau d'amorçage 26, qui dans le cas présent est lisse.

Suivant une autre particularité de l'invention, également visible sur la Fig. 2, il est prévu sur la partie avant 2 du châssis de la presse, entre les bandes ou courroies 6, des doigts 30 qui sont montés sur ce châssis par leur partie arrière en 31. Ces doigts 30 s'étendent dans le cas présent au-dessus du rouleau de renvoi ou d'entraînement 7 et jusqu'au voisinage de la partie supérieure du rouleau d'amorçage 26. Ils sont munis à l'arrière d'une partie formant axe de pivotement 41 supportée par un profilé fixe 42 s'étendant transversalement à la presse, et ils traversent des fentes 43 prévues dans une aile de ce profilé, qui limitent leur débattement. Ce mode de montage permet aux doigts de s'adapter à des déplacements latéraux éventuels des courroies 6 pendant le fonctionnement de la presse.

Les recherches qui ont abouti à l'invention ont montré qu'en pratique cette conjugaison de la racle 28 et des doigts 30 évite avec certitude tout enroulement perturbateur des produits de récolte même très humides autour du rouleau d'amorçage, ce qui favorise en conséquence la formation d'un noyau de balle et remédie ainsi aux inconvénients de la technique antérieure.

La racle prévue suivant l'invention peut s'étendre de façon continue sur toute la largeur de la presse ou bien elle peut être constituée par des éléments séparés ou par des dents rapprochées les unes des autres. Dans le cas d'une racle continue, il est prévu de préférence une manivelle de commande sur chaque côté de la presse.

On voit que l'invention remédie ainsi aux inconvénients mentionnés et permet d'obtenir un amorçage correct dans la formation d'une balle à l'intérieur de la chambre de la presse, quelles que soient les conditions des produits de récolte ramassés.

## Revendications

1. Presse à balles cylindriques ou rondes comprenant des jeux de bandes ou courroies (6) ménageant une chambre de formation d'une balle par enroulement, ainsi qu'un ramasseur (24) destiné à reprendre les produits de récolte sur le sol pour leur transfert à la chambre de formation de la balle à travers un intervalle ou orifice (25) d'entrée des produits, et un rouleau d'amorçage (26) disposé de l'autre côté de cet orifice (25) par rapport au ramasseur (24), caractérisée en ce qu'une racle (28) est associée au rouleau d'amorçage (26) au-dessous de celui-ci, en combinaison avec des doigts (30) disposés entre les bandes ou courroies (6), montés sur le châssis de la presse, s'étendant au voisinage du rouleau d'entraînement inférieur (7) des bandes ou courroies (6) et dont l'extrémité se prolonge jusqu'au voisinage immédiat du rouleau d'amorçage (26), au-dessus de ce dernier.

2. Presse à balles cylindriques suivant la revendication 1, caractérisée en ce que les doigts (30) sont munis à l'arrière d'une partie formant axe de pivotement (41) supportée par un profilé fixe transversal (42) et traversent des fentes (43) d'une aile de ce profilé, pour permettre un débattement limité par pivotement en vue de leur adaptation à des déplacements latéraux éventuels des courroies (6).

3. Presse à balles cylindriques suivant l'une quelconque des revendications précédentes, caractérisée en ce que la racle (28) s'étend de façon continue sur toute la largeur de la presse, ou bien est constituée par des éléments séparés ou par des dents rapprochées les unes des autres.

## Claims

1. Baler for cylindrical or round bales, having bands or belts (6) defining a chamber for forming a bale by rolling, and a collector (24) adapted to pick up the harvested products from the ground so as to transfer them to the bale forming chamber via an entry gap or orifice (25) for the products, and a starter roll (26) disposed on the other side of this orifice (25) from the collector (24), characterised in that a scraper (28) is associated with the starter roll (26), below the latter and in combination with fingers (30) which are disposed between the bands or belts (6) and mounted on the chassis of the baler so as to extend in the region of the lower guide roll roller for the bands or belts (6), the free ends of the fingers extending into the immediate vicinity of the starter roll (26), above the latter.

2. A baler for cylindrical bales according to Claim 1, characterised in that the fingers (30) are provided at the rear with a portion which forms a pivot axis (41) supported by a fixed transverse angle beam (42) and extending through openings (43) formed in one wing of this beam, so as to allow a limited pivoting movement so that the fingers can adapt for lateral displacement of the belts (6).

3. A baler for cylindrical bales according to either of the preceding Claims, characterised in that the scraper (28) extends continuously over the whole width of the baler, or comprises separate elements or teeth arranged closely adjacent to each other.

## Patentansprüche

1. Presse für zylindrische oder runde Ballen, die Sätze von Bändern oder Riemen (6) umfaßt, welche eine Kammer zur Bildung eines Ballens durch Aufrollen bildet, sowie einen Aufsammeler (24), der dazu bestimmt ist, die Ernteprodukte vom Boden aufzunehmen, für deren Überführung durch einen Abstand oder eine Eintrittsöffnung (25) für die Produkte in die Ballenbildungskammer, und eine Einleitungsrolle (26), die, bezogen auf den Aufsammeler (24), auf der anderen Seite dieser Öffnung (25) angeordnet ist, dadurch gekennzeichnet, daß eine Abstreicheinrichtung (28) der Einleitungsrolle (26), und zwar unterhalb dieser, zugeordnet ist, in Verbindung mit Fingern (30), die zwischen den Bändern oder Riemen (6) vorgesehen und auf dem Chassis der Presse montiert sind und sich in der Nähe einer unteren Antriebsrolle (7) für die Bänder oder Riemen (6) erstrecken und deren äußersten Enden sich bis in die unmittelbare Nähe der Einleitungsrolle (26) verlängern, und zwar oberhalb dieser.

2. Presse für zylindrische Ballen nach Anspruch 1, dadurch gekennzeichnet, daß die Finger (30) im rückwärtigen Bereich einen Abschnitt aufweisen, der eine Schwenkachse (41) bildet und durch ein festes Querprofil (42) getragen wird, und eine Ausnehmung (43) in einem Schenkel des Profils durchdringen, um eine begrenzte Schwenkbewegung im Hinblick auf ihre Anpassung an eventuelle seitliche Versetzungen der Riemen (6) zu erlauben.

3. Presse für zylindrische Ballen nach irgendeinem der voranstehenden Ansprüche, dadurch gekennzeichnet, daß die Abstreicheinrichtung (28) sich kontinuierlich über die ganze Breite der Presse erstreckt oder durch getrennte Elemente oder durch Zähne gebildet sind, die nahe beieinander angeordnet sind.

FIG. 1

**FIG. 2**